# EUROPÄISCHE PATENTSCHRIFT

(11) **EP 3 765 901 B1**
(45) Veröffentlichungstag und Bekanntmachung des Hinweises auf die Patenterteilung: **23.11.2022**
(21) Anmeldenummer: 19711056.2
(22) Anmeldetag: 11.03.2019
(51) Int. Cl.: G03B 17/16, B60R 11/04

(54) **KAMERASYSTEM**
CAMERA SYSTEM
SYSTÈME DE CAMÉRA

(30) Priorität: 13.03.2018 DE 102018105740
(43) Veröffentlichungstag der Anmeldung: 20.01.2021
(73) Patentinhaber: Hensoldt Optronics GmbH, 73447 Oberkochen (DE)
(72) Erfinder: MERZ, Simon, 73433 Aalen (DE); ZIEGLER, Oliver, 73463 Westhausen (DE)
(74) Vertreter: Frey, Sven Holger
(86) Internationale Anmeldenummer: PCT/EP2019/056044
(87) Internationale Veröffentlichungsnummer: WO 2019/175114

(56) Entgegenhaltungen:
- DE-A1-102011 004 445
- JP-A- 2003 335 180
- JP-A- 2014 192 605

## Beschreibung

Die Erfindung betrifft ein Kamerasystem umfassend ein Gehäuse und eine in dem Gehäuse angeordnete optronische Sensoreinheit.

An Kameras für Flugzeuge, beispielsweise Flugzeuge mit Strahltriebwerk, werden hohe Anforderungen bezüglich der optischen Sichtlinien der Kameras sowie bezüglich des Temperatureinsatzbereichs gestellt. Bei dem Einsatz von Kamerasystemen bei Flugzeugen sind hohe Umweltbelastungen aufgrund von Druckunterschieden und Temperaturunterschieden gegeben. Es können hohe Vibrations- oder Beschleunigungslasten auftreten, welche dazu führen, dass entweder Teile oder Komponenten der Kameras beschädigt werden oder die oben erwähnten hohen Anforderungen bezüglich der Sichtlinien nicht mehr erfüllt werden können. Die eingangs erwähnten Kamerasysteme können in unterschiedlichen Positionen am Flugzeug angeordnet sein. Dabei können Kameras auch im Bereich der Triebwerke angeordnet sein. Hier treten besonders starke Vibrationen und Schwingungen auf, die auf die Kamera und ihre Komponenten, insbesondere die optronische bzw. optoelektronische Sensoreinheit mit einer Optik und einer Detektoreinrichtung wirken. Besonders empfindlich ist der Sensor bzw. der Detektor der Kamera diesbezüglich. Sehr ungünstig ist es außerdem, wenn die Eigenresonanzfrequenz der Kameras im Bereich der Anregungsfrequenz durch das Flugzeug liegt. Hierdurch können die eingeleiteten Schwingungen bzw. Beschleunigungen vervielfacht werden, so dass es zu einer Resonanzkatastrophe kommt.

Erschwerend kommt hinzu, dass derartige Kameras einen kompakten Aufbau aufweisen müssen, da in der Luftfahrt der zur Verfügung stehende Bauraum in der Regel stark begrenzt ist. Ein Einsatz von dickeren bzw. stärkeren Gehäusewänden oder entsprechenden Versteifungen kommt bei den Kameras somit häufig nicht in Betracht.

Ausgehend davon liegt der vorliegenden Erfindung die Aufgabe zugrunde, ein Kamerasystem der eingangs erwähnten Art zu verbessern, wobei insbesondere von außen eingeleitete hohe Beschleunigungs- und/oder Schwingungslasten auf die Kamera wirken können, ohne dass es zu einer Beschädigung der Kamera oder deren Komponenten kommt und ohne dass die optische Sichtlinie der Kamera beeinträchtigt wird. JP 2014192605 und JP 2003335180 offenbaren vibrationsarm gelagerte Kameras.

Diese Aufgabe wird erfindungsgemäß durch ein Kamerasystem, insbesondere für Fahrzeuge oder Flugzeuge, gelöst, umfassend:
- ein Gehäuse; und
- eine in dem Gehäuse angeordnete optoelektronische Sensoreinheit mit wenigstens einer Detektoreinrichtung und wenigstens einer der wenigstens einen Detektoreinrichtung vorgeschalteten Optik, wobei die optoelektronische Sensoreinheit gegenüber dem Gehäuse elastisch gelagert oder aufgehängt ist.

Es wird eine Schwingungsisolierung eines Kamerasystems bzw. optischen Systems, bestehend aus einem Detektor einer Optik mittels einer elastischen Aufhängung dieser optischen Einheit gegenüber dem Kameragehäuse geschaffen. Das Kamerasystem kann beispielsweise ein Wärmebildgerät oder eine Infrarotkamera sein. Durch die elastische Lagerung der optoelektronischen Sensoreinheit gegenüber dem Gehäuse können höhere Lasten in die Kamera eingeleitet werden, ohne dass es zu einer Beschädigung der Kamera oder ihrer Komponenten bzw. des Detektors kommt. Durch die verringerten Lasten auf den Detektor verringert sich ebenfalls die Verkippung der Sichtlinie unter Vibrationsanregung. Ebenfalls erhöht sich durch die Verringerung der in die Kamera eingeleiteten Lasten die mittlere Betriebsdauer zwischen Ausfällen (Mean Time Between Failures/MTBF). Somit wird wenigstens ein Mittel zur Reduktion von auf die Kamera und/oder deren Komponenten wirkenden von außen eingeleiteten mechanischen Schwingungen oder Vibrationen vorgesehen.

Die optoelektronische Sensoreinheit kann somit einen Resonator bilden. Durch die Isolierung kann eine niederfrequente Abkopplung des inneren optischen Systems von der äußeren Anregung erreicht und die eingeleiteten Beschleunigungslasten durch die Entkopplung und die Materialdämpfung des Elastomers auf ein Minimum reduziert werden. Durch die niederfrequente Abkopplung kann der Resonator im überkritischen Frequenzbereich betrieben werden. Im Gegensatz zu einer bekannten Entkopplung mechanischer Schwingungen, bei der ein komplettes Gerät, wie z. B. eine Werkzeugmaschine, von der Anregung entkoppelt wird, kann durch die Entkopplung der Schwingungen innerhalb der Kamera das Kameragehäuse fest, insbesondere an einem Flugzeug, angeschraubt werden. Dadurch muss die Schnittstelle der Kamera zum Flugzeug nicht geändert werden. Bei dem Betrieb des Resonators im überkritischen Frequenzbereich ist die Anregungsfrequenz im Wesentlichen oberhalb der Resonanzfrequenz, wobei eine Dämpfung mit beispielsweise 10 dB pro Oktave erfolgt. Mindestens 25 bis 30% der Masse des Gesamtgerätes können so in vorteilhafter Weise von den auf das Gerät einwirkenden Schwingungen entkoppelt werden. Dadurch ist eine bessere Ausnützung des zur Verfügung stehenden Bauraumes und eine geringere Gesamtmasse möglich, was bei einem Einsatz in Flugzeugen von großer Bedeutung ist. Durch die niederfrequente Entkopplung oder Abstimmung des Resonators durch die elastische bzw. weiche Aufhängung verschiebt sich die maximale Amplitude des schwingenden Systems, wobei die darüber liegenden Frequenzen stark gedämpft werden. Der Betrieb erfolgt im Wesentlichen oberhalb der Resonanzfrequenz des Resonators. Durch die niederfrequente Abstimmung des Resonators wird eine besonders hohe Isolationswirkung bei hochfrequenten Schwingungen, wie sie z. B. bei Flugzeugen mit Strahltriebwerken auftreten, erreicht.

Die optoelektronische Sensoreinheit kann über wenigstens zwei, insbesondere ringförmige, elastische Lagerungseinrichtungen mit dem Gehäuse verbunden sein.

Die elastischen Lagerungseinrichtungen können Elastomerelemente, beispielsweise aus Gummi aufweisen, welche insbesondere zwischen Metallteilen angeordnet sind und/oder diese miteinander verbinden.

Eine erste, insbesondere ringförmige, elastische Lagerungseinrichtung kann die optoelektronische Sensoreinheit im Bereich der wenigstens einen Optik mit dem Gehäuse verbinden. Eine zweite, insbesondere ringförmige, elastische Lagerungseinrichtung kann die optoelektronische Sensoreinheit im Bereich der wenigstens eine Detektoreinrichtung mit dem Gehäuse verbinden.

Sehr vorteilhaft ist es, wenn die, insbesondere ringförmigen, elastischen Lagerungseinrichtungen derart ausgelegt sind oder eine derartige Innengeometrie aufweisen, dass sie eine im Wesentlichen gleiche bzw. identische Steifigkeit und/oder Dämpfung in allen drei Raumrichtungen aufweisen.

Die elastischen Lagerungseinrichtungen können eine Innengeometrie aufweisen, welche eine nahezu identische Steifigkeit in allen drei Raumrichtungen ermöglicht. Dadurch sind die Eigenfrequenzen des Resonators in allen drei Raumrichtungen gleich groß. Bei Anregung durch Vibrationslasten sind die Relativbewegungen der optoelektronischen Sensoreinheit mit dem Detektor und der zugeordneten Optik maximal so groß, dass eine Beeinflussung der optischen Leistung ausgeschlossen ist.

Die elastischen Lagerungseinrichtungen können ringförmig ausgeführt sein.

Die ringförmigen elastischen Lagerungseinrichtungen umfassen jeweils wenigstens folgendes:
- einen metallischen Innenring, welcher an der optoelektronischen Sensoreinheit angeordnet ist;
- einen metallischen Außenring, welcher an dem Gehäuse angeordnet ist; und
- ein, insbesondere aus Gummi gebildetes, ringförmiges Elastomerelement, über welches der metallische Innenring mit dem metallischen Außenring verbunden ist.

Durch derartige Gummi-Metall-Elastomerkombinationen kann die im Wesentlichen gleiche bzw. identische Steifigkeit und/oder Dämpfung in allen drei Raumrichtungen in vorteilhafter Weise erreicht werden.

Das ringförmige Elastomerelement kann an dem metallischen Innenring und/oder an dem metallischen Außenring mittels Vulkanisation befestigt bzw. aufvulkanisiert sein. Eine Bildebene der wenigstens einen Optik kann wenigstens annähernd im Bereich des Schwerpunktes der optoelektronischen Sensoreinheit liegen. Die Optik kann somit derart ausgelegt sein, dass deren Relativbewegungen aufgrund ihrer elastischen Lagerung bei einer Schwingungsanregung einen vernachlässigbaren Einfluss auf die Genauigkeit der Sichtlinie hat.

Der Schwerpunkt der optoelektronischen Sensoreinheit kann auf der optischen Achse der Optik wenigstens annähernd in der Mitte zwischen der ersten elastischen Lagerungseinrichtung und der zweiten, insbesondere ringförmigen, elastischen Lagerungseinrichtung liegen.

Es kann wenigstens eine elastische Lagerungseinrichtung vorhanden sein, über welche die optoelektronische Sensoreinheit, insbesondere direkt mit dem Gehäuse oder mit einer vorzugsweise ringförmigen Halteeinrichtung verbunden ist, welche ihrerseits mit dem Gehäuse verbunden ist. Dadurch kann die optoelektronische Sensoreinheit von mechanischen Schwingungen entkoppelt werden. Ist lediglich eine elastische Lagerungseinrichtung vorhanden, könnte diese in vorteilhafter Weise im Bereich des Schwerpunkts der optoelektronischen Sensoreinheit angeordnet sein.

Vorteilhaft ist es, wenn wenigstens eine elastische Lagerungseinrichtung aus mehreren zueinander beabstandet angeordneten bzw. separaten Ringsegmenten gebildet ist.

Wenigstens eine elastische Lagerungseinrichtung kann durch drei, vier, sechs, acht, neun oder zwölf beabstandet nebeneinander angeordnete bzw. separate Ringsegmente gebildet sein.

Alternativ zu einem umlaufenden und ununterbrochenen Querschnitt der elastischen Lagerungseinrichtung bzw. des Gummimetall-Elements, kann das eigentliche Entkopplungselement in einzelne Elemente oder Segmente aufgeteilt werden. Die Federsteifigkeit dieser Entkopplung und damit die Eigenfrequenz des Resonators, kann durch die Verwendung von unterschiedlichen Anzahlen dieser Elemente oder Segmente verändert werden. Es können beispielsweise insbesondere symmetrische Anordnungen der Segmente mit Anzahlen von drei, vier, sechs, acht, neun oder zwölf Segmenten zum Einsatz kommen. Dies kann einem Änderungsbereich der Federsteifigkeit um einen Faktor 4 entsprechen, was einer Änderung der Eigenfrequenz um einen Faktor 2 gleichkommt.

Die Ringsegmente der wenigstens einen elastischen Lagerungseinrichtung können in mehreren Gruppen, vorzugsweise von zwei oder drei Ringsegmenten angeordnet sein. Dabei können die gleichmäßigen Abstände zwischen den einzelnen Ringsegmenten einer jeweiligen Gruppe geringer sein, als die Abstände zwischen den Gruppen von Ringsegmenten.

Die Ringsegmente können jeweils wenigstens folgendes umfassen:
- ein metallisches Innenringsegment, welches an der optoelektronischen Sensoreinheit angeordnet ist;
- ein metallisches Außenringsegment, welches an dem Gehäuse oder an der mit dem Gehäuse verbundenen ringförmigen Halteeinrichtung angeordnet ist; und
- ein, insbesondere aus Gummi gebildetes, Elastomerringsegment, über welches das metallische Innenringsegment mit dem metallischen Außenringsegment verbunden ist.

Eine Vorspannung des ringförmigen Elastomerelements oder des Elastomerringsegments kann variabel einstellbar sein.

Die Vorspannung kann mittels einer veränderbaren Kompression des ringförmigen Elastomerelements oder des Elastomerringsegments in Längsrichtung bezogen auf seinen Querschitt variabel einstellbar sein.

Durch die Veränderung der Vorspannung des Elastomers durch dessen Kompression in seiner Längsrichtung, kann nochmals eine Veränderung der Federsteifigkeit um den Faktor 2 erreicht werden, was abermals einem Faktor von 1,4 in der Eigenfrequenz entspricht. Die Kompression des Elastomers in seiner Längsrichtung sorgt für eine nahezu gleichmäßige Veränderung von axialer und radialer Steifigkeit des Resonators. Die Einstellung kann derart erfolgen, dass die Änderung der Steifigkeit sowohl in axialer Richtung als auch in radialer Richtung annähernd gleich ist.

Eine Steifigkeit oder Federsteifigkeit der elastischen Lagerungseinrichtung kann derart verstellbar sein, dass eine synchrone Änderung in radialer Richtung und in axialer Richtung um wenigstens annähernd den gleichen Betrag erfolgt.

Die wenigstens eine elastische Lagerungseinrichtung kann zwischen der ringförmigen Halteeinrichtung und einem ersten Gewindering zur Fixierung angeordnet sein.

Ein zweiter Gewindering kann zwischen der ringförmigen Halteeinrichtung und dem ersten Gewindering verschiebbar angeordnet sein, mittels welchem der metallische Außenring oder das metallische Außenringsegment derart entlang einer Innenkontur der ringförmigen Halteeinrichtung verschiebbar ist, dass der auf das ringförmige Elastomerelement oder das Elastomerringsegment ausgeübte Druck in Längsrichtung bezogen auf seinen Querschnitt veränderbar ist.

Der zweite Gewindering kann ein Außengewinde und ein Innengewinde umfassen, welche unterschiedliche Drehrichtungen aufweisen. Beispielsweise kann das Außengewinde als Rechtsgewinde und das Innengewinde als Linksgewinde oder umgekehrt ausgeführt sein.

Die Ringsegmente oder die Gruppen von Ringsegmenten können in gleichmäßigen Abständen entlang eines Innendurchmessers bzw. einer inneren Umfangslinie der ringförmigen Halteeinrichtung angeordnet sein. Des Weiteren können sie achsensymmetrisch oder punktsymmetrisch angeordnet sein.

Vorteilhafte Ausgestaltungen und Weiterbildungen der Erfindung ergeben sich aus den Unteransprüchen. Nachfolgend ist anhand der Zeichnung prinzipmäßig ein Ausführungsbeispiel der Erfindung beschrieben.

Es zeigen:
- Figur 1: Eine vereinfachte Schnittdarstellung eines erfindungsgemäßen Kamerasystems;
- Figur 2: eine perspektivische Ansicht einer ersten ringförmigen elastischen Lagerungseinrichtung;
- Figur 3: eine vereinfachte Schnittansicht der ersten ringförmigen elastischen Lagerungseinrichtung aus Figur 2;
- Figur 4: eine perspektivische Darstellung einer zweiten ringförmigen elastischen Lagerungseinrichtung;
- Figur 5: eine vereinfachte Schnittansicht der zweiten ringförmigen elastischen Lagerungseinrichtung aus Figur 4;
- Figur 6: eine perspektivische geschnittene Explosionsdarstellung einer weiteren Ausführungsform des erfindungsgemäßen Kamerasystems;
- Figur 7: eine vereinfachte erste Schnittansicht eines Teils der Ausführungsform nach Figur 6;
- Figur 8: eine vereinfachte zweite Schnittansicht eines Teils der Ausführungsform nach Figur 6; und
- Fig. 9 - 14: vereinfachte perspektivische Darstellungen weiterer Ausführungsformen von elastischen Lagerungseinrichtungen.

Funktionsgleiche Elemente sind in den Figuren mit denselben Bezugszeichen versehen.

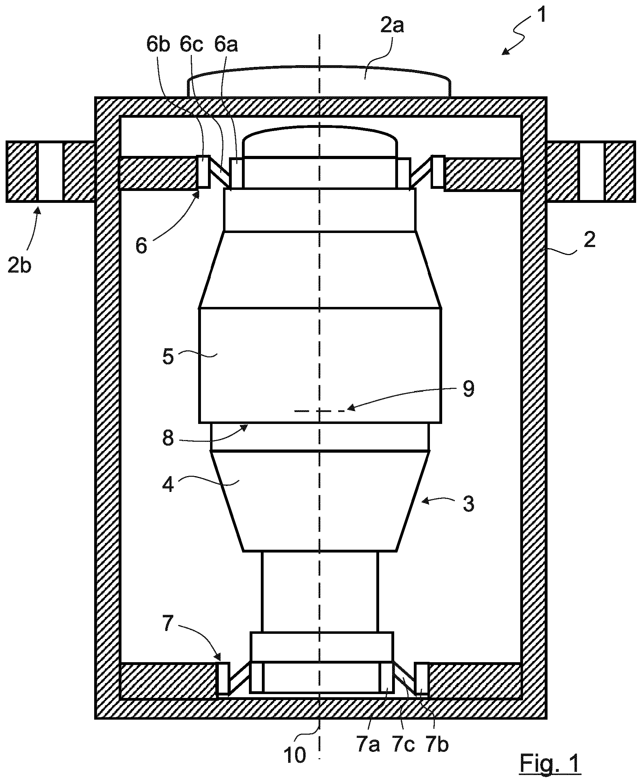

Figur 1 zeigt ein erfindungsgemäßes Kamerasystem 1 umfassend ein Gehäuse 2 und eine in dem Gehäuse 2 angeordnete optoelektronische Sensoreinheit 3 mit wenigstens einer Detektoreinrichtung 4 und wenigstens einer der wenigstens einen Detektoreinrichtung 4 vorgeschalteten Optik 5, wobei die optoelektronische Sensoreinheit 3 gegenüber dem Gehäuse 2 elastisch aufgehängt oder gelagert ist. Das Gehäuse 2 weist ferner ein Fenster 2a und eine Schnittstelle 2b beispielsweise zur Montage an einem Fahrzeug oder Flugzeug auf.

Die optoelektronische Sensoreinheit 3 ist über wenigstens zwei elastische Lagerungseinrichtungen 6,7 mit dem Gehäuse 2 verbunden. Im vorliegenden Ausführungsbeispiel sind die zwei elastischen Lagerungseinrichtungen 6,7 ringförmig oder umlaufend ausgeführt. In weiteren nicht dargestellten Ausführungsbeispielen sind jedoch noch andere Lösungen denkbar.

Wie aus Figur 1 ersichtlich, verbindet wenigstens eine erste elastische Lagerungseinrichtung 6 die optoelektronische Sensoreinheit 3 im Bereich der wenigstens einen Optik 5 mit dem Gehäuse 2. Wenigstens eine zweite elastische Lagerungseinrichtung 7 verbindet die optoelektronische Sensoreinheit 3 im Bereich der wenigstens einen Detektoreinrichtung 4 mit dem Gehäuse 2. Wie aus Figur 1 ferner ersichtlich, liegt eine vereinfacht angedeutete Bildebene 8 der wenigstens einen Optik 5 wenigstens annähernd im Bereich des Schwerpunktes 9 der optoelektronischen Sensoreinheit 3 (stark vereinfacht angedeutet).

Die optoelektronische Sensoreinheit 3 bildet somit einen Resonator.

Der Schwerpunkt 9 der optoelektronischen Sensoreinheit 3 liegt auf einer optischen Achse 10 (gestrichelt angedeutet) der Optik 5 wenigstens annähernd in der Mitte zwischen der wenigstens einen ersten elastischen Lagerungseinrichtung 6 und der wenigstens einen zweiten elastischen Lagerungseinrichtung 7. Der Abstand zwischen dem Schwerpunkt 9 und der ersten elastischen Lagerungseinrichtung 6 entlang der optischen Achse 10 entspricht somit im Wesentlichen dem Abstand zwischen dem Schwerpunkt 9 und der zweiten elastischen Lagerungseinrichtung 7 entlang der optischen Achse 10.

Die ringförmigen elastischen Lagerungseinrichtungen 6,7 weisen jeweils folgendes auf:
- einen metallischen Innenring 6a,7a, welcher an der optoelektronischen Sensoreinheit 3 angeordnet ist;
- einen metallischen Außenring 6b,7b, welcher an dem Gehäuse 2 angeordnet ist; und
- ein, insbesondere aus Gummi gebildetes ringförmiges Elastomerelement 6c,7c, über welches der metallische Innenring 6a,7a mit dem metallischen Außenring 6b, 7b verbunden ist.

Das ringförmige Elastomerelement 6c,7c ist an dem metallischen Innenring 6a,7a und/oder an dem metallischen Außenring 6b,7b aufvulkanisiert bzw. mittels Vulkanisation befestigt.

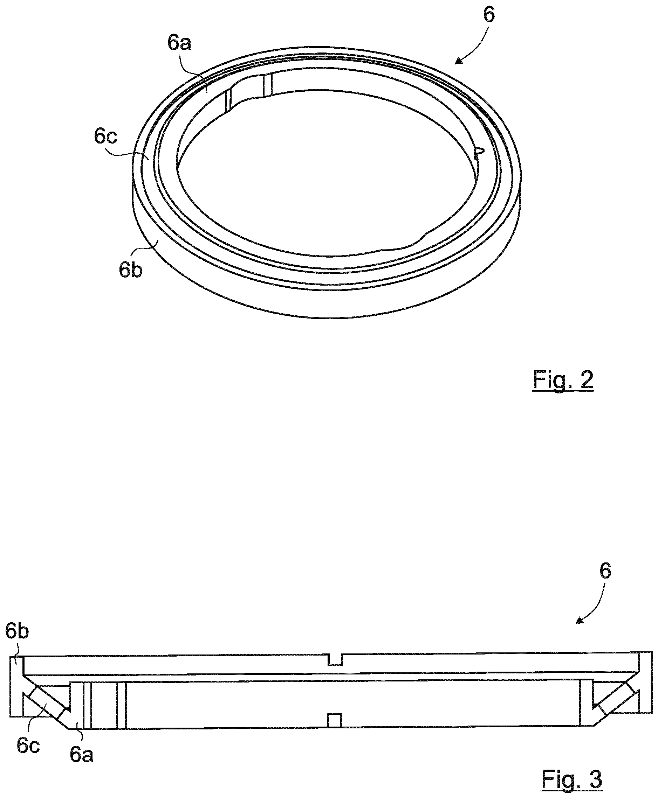

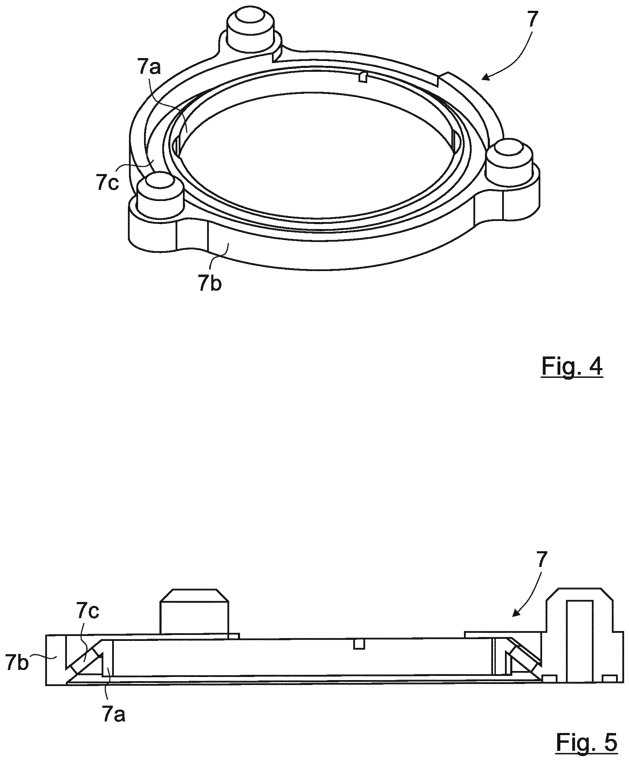

In den Figuren 2 und 3 ist die erste elastische Lagerungseinrichtung 6 mit dem metallischen Innenring 6a, dem metallischen Außenring 6b und dem Elastomerelement 6c perspektivisch sowie in einer vereinfachten Schnittansicht gezeigt. Die Figuren 4 und 5 zeigen eine im Wesentlichen gleich ausgeführte zweite elastische Lagerungseinrichtung 7 mit dem metallischen Innenring 7a, dem metallischen Außenring 7b und dem ringförmigen Elastomerelement 7c ebenfalls in einer perspektivischen Darstellung sowie in einer vereinfachten Schnittdarstellung.

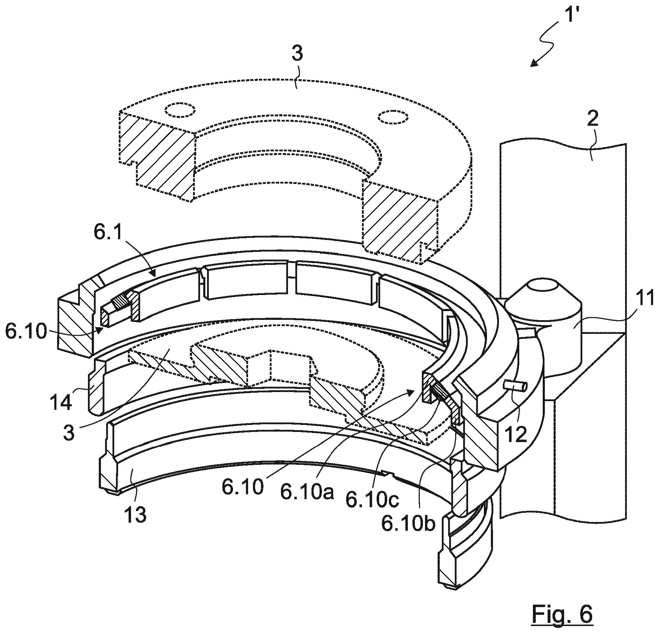

Figur 6 zeigt eine weitere Ausführungsform eines erfindungsgemäßen Kamerasystems 1' umfassend ein gestrichelt angedeutetes Gehäuse 2 und eine in dem Gehäuse 2 angeordnete optoelektronische Sensoreinheit 3 (gestrichelt angedeutet) mit wenigstens einer Detektoreinrichtung und wenigstens einer der wenigstens einen Detektoreinrichtung vorgeschalteten Optik (in Figur 6 nicht dargestellt), wobei die optoelektronische Sensoreinheit 3 gegenüber dem Gehäuse 2 elastisch aufgehängt oder gelagert ist.

Die optoelektronische Sensoreinheit 3 ist über eine elastische Lagerungseinrichtung 6.1 mit einer vorzugsweise ringförmigen Halteeinrichtung 11 verbunden, welche ihrerseits mit dem Gehäuse 2 verbunden ist. Im vorliegenden Ausführungsbeispiel ist die elastische Lagerungseinrichtung 6.1 aus mehreren zueinander beabstandet angeordneten Ringsegmenten 6.10 gebildet. Zur Rotationssicherung bzw. -fixierung sind Stifte 12 vorhanden, welche in nicht näher dargestellte Langlöcher der Ringsegmente 6.10 eingreifen. Selbstverständlich könnte die optoelektronische Sensoreinheit 3 zusätzlich über wenigstens eine weitere elastische Lagerungseinrichtung mit dem Gehäuse 2 oder mit einer vorzugsweise ringförmigen Halteeinrichtung verbunden sein, welche ihrerseits mit dem Gehäuse 2 verbunden ist.

Die Ringsegmente 6.10 umfassen jeweils wenigstens folgendes:
- ein metallisches Innenringsegment 6.10a, welches an der optoelektronischen Sensoreinheit 3 angeordnet ist;
- ein metallisches Außenringsegment 6.10b, welches an dem Gehäuse 2 oder an der mit dem Gehäuse 2 verbundenen ringförmigen Halteeinrichtung 11 angeordnet ist; und
- ein, insbesondere aus Gummi gebildetes, Elastomerringsegment 6.10c, über welches das metallische Innenringsegment 6.10a mit dem metallischen Außenringsegment 6.10b verbunden ist.

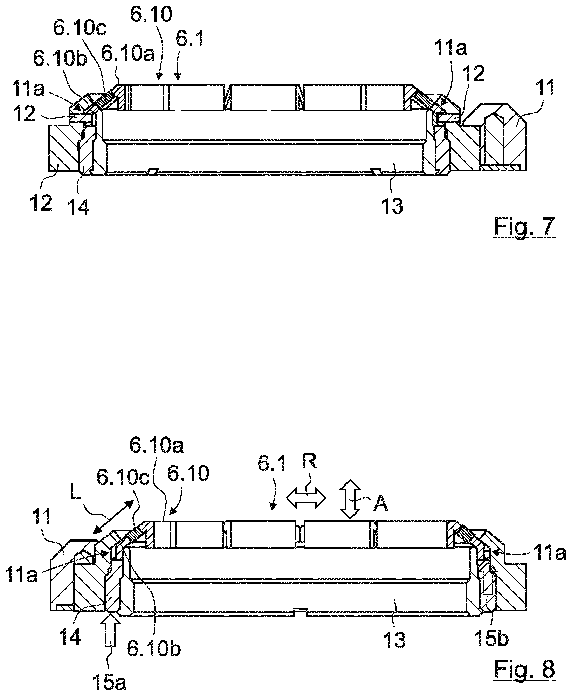

Wie aus den Figuren 7 und 8 ersichtlich, kann eine Vorspannung des Elastomerringsegments 6.10c der elastischen Lagerungseinrichtung 6.1 variabel einstellbar sein. Ebenso ist es auch möglich dies mit den notwendigen Änderungen bei den ringförmigen Elastomerelementen 6c, 7c gemäß den Figuren 1 - 5 vorzusehen (nicht gezeigt).

Die Vorspannung ist mittels einer veränderbaren Kompression des ringförmigen Elastomerelements 6c, 7c oder des Elastomerringsegments 6.10c in Längsrichtung L bezogen auf seinen Querschitt variabel einstellbar.

Wie aus den Figuren 6 bis 8 ersichtlich, ist die wenigstens eine elastische Lagerungseinrichtung 6.1 zwischen der ringförmigen Halteeinrichtung 11 und einem ersten Gewindering 13 zur Fixierung bzw. Konterung, insbesondere nach Einstellung der Vorspannung, angeordnet.

Ein zweiter Gewindering 14 ist zwischen der ringförmigen Halteeinrichtung 11 und dem ersten Gewindering 13 verschiebbar angeordnet, mittels welchem der metallische Außenring 6b, 7b (nicht dargestellt) oder das metallische Außenringsegment 6.10b derart entlang einer Innenkontur 11a der ringförmigen Halteeinrichtung 11 verschiebbar ist, dass der auf das ringförmige Elastomerelement 6c, 7c oder das Elastomerringsegment 6.10c ausgeübte Druck in Längsrichtung L bezogen auf seinen Querschnitt veränderbar ist. Pfeile 15a, 15b deuten ein Einschieben des zweiten Gewinderings 14, z. B. um 0,5 mm an. Die Einstellung kann derart erfolgen, dass die Änderung der Steifigkeit sowohl in axialer Richtung (durch einen Pfeil A angedeutet) als auch in radialer Richtung (durch einen Pfeil R angedeutet) wenigstens annähernd gleich ist.

Der zweite Gewindering 14 kann ein Außengewinde und ein Innengewinde umfassen, welche unterschiedliche Drehrichtungen aufweisen. Beispielsweise kann das Außengewinde als Rechtsgewinde und das Innengewinde als Linksgewinde oder umgekehrt ausgeführt sein.

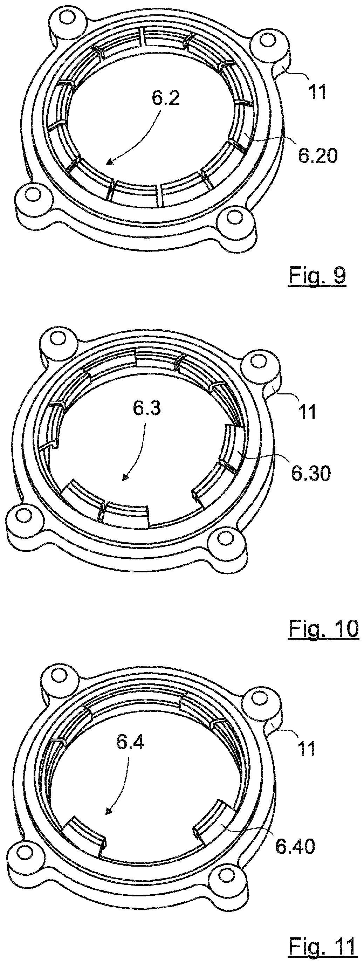

Die Figuren 9 - 14 zeigen weitere Ausführungsformen von elastischen Lagerungseinrichtungen 6.2 - 6.7, deren Ringsegmente 6.20 - 6.70 denselben Aufbau wie die Ringsegmente 6.10 aus den Figuren 6, 7 und 8 aufweisen können.

Die in Figur 9 gezeigte Ausführungsform einer elastischen Lagerungseinrichtung 6.2 weist zwölf Ringsegmente 6.20 auf, welche in gleichmäßigen Abständen entlang eines Innendurchmessers bzw. einer inneren Umfangslinie der ringförmigen Halteeinrichtung 11 angeordnet sind.

Die in Figur 10 gezeigte Ausführungsform einer elastischen Lagerungseinrichtung 6.3 weist acht Ringsegmente 6.30 auf, welche in Gruppen von jeweils zwei Ringsegmenten 6.30 in gleichmäßigen Abständen entlang des Innendurchmessers bzw. der inneren Umfangslinie der ringförmigen Halteeinrichtung 11 angeordnet sind.

Die in Figur 11 gezeigte Ausführungsform einer elastischen Lagerungseinrichtung 6.4 weist vier Ringsegmente 6.40 auf, welche in gleichmäßigen Abständen entlang des Innendurchmessers bzw. der inneren Umfangslinie der ringförmigen Halteeinrichtung 11 angeordnet sind.

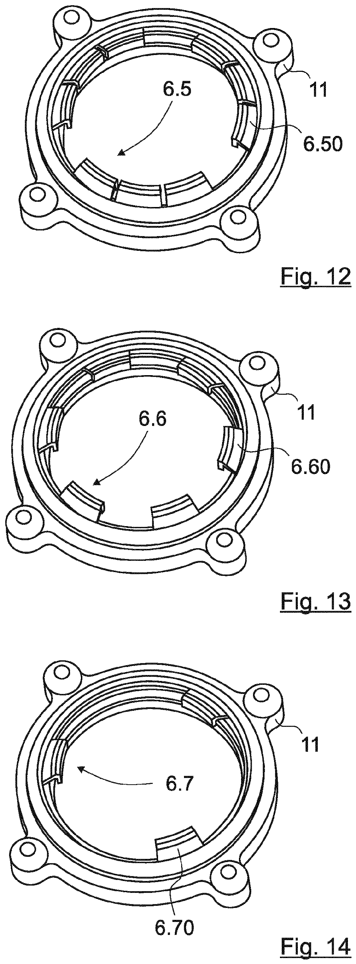

Die in Figur 12 gezeigte Ausführungsform einer elastischen Lagerungseinrichtung 6.5 weist neun Ringsegmente 6.50 auf, welche in Gruppen von jeweils drei Ringsegmenten 6.50 in gleichmäßigen Abständen entlang des Innendurchmessers bzw. der inneren Umfangslinie der ringförmigen Halteeinrichtung 11 angeordnet sind.

Die in Figur 13 gezeigte Ausführungsform einer elastischen Lagerungseinrichtung 6.6 weist sechs Ringsegmente 6.60 auf, welche in gleichmäßigen Abständen entlang des Innendurchmessers bzw. der inneren Umfangslinie der ringförmigen Halteeinrichtung 11 angeordnet sind.

Die in Figur 14 gezeigte Ausführungsform einer elastischen Lagerungseinrichtung 6.7 weist drei Ringsegmente 6.70 auf, welche in gleichmäßigen Abständen entlang des Innendurchmessers bzw. der inneren Umfangslinie der ringförmigen Halteeinrichtung 11 angeordnet sind.

### Bezugszeichenliste:

- 1,1': Kamerasystem
- 2: Gehäuse
- 2a: Fenster
- 2b: Schnittstelle
- 3: optoelektronische Sensoreinheit
- 4: Detektoreinrichtung
- 5: Optik
- 6: erste elastische Lagerungseinrichtung
- 7: zweite elastische Lagerungseinrichtung
- 6a,7a: Innenring
- 6b,7b: Außenring
- 6c,7c: Elastomerelement
- 6.1-6.7: elastische Lagerungseinrichtung
- 6.10-6.70: Ringsegmente
- 6.10a: Innenringsegment
- 6.10b: Außenringsegment
- 6.10c: Elastomerringsegment
- 8: Bildebene
- 9: Schwerpunkt
- 10: optische Achse
- 11: Halteeinrichtung
- 11a: Innenkontur der Halteeinrichtung
- 12: Stift
- 13: erster Gewindering
- 14: zweiter Gewindering
- 15a,15b: Pfeile
- L: Längsrichtung
- A,R: Pfeile

## Patentansprüche

1. Kamerasystem (1,1') umfassend:
- ein Gehäuse (2); und
- eine in dem Gehäuse (2) angeordnete optoelektronische Sensoreinheit (3) mit wenigstens einer Detektoreinrichtung (4) und wenigstens einer der wenigstens einen Detektoreinrichtung (4) vorgeschalteten Optik (5), wobei die optoelektronische Sensoreinheit (3) gegenüber dem Gehäuse (2) elastisch gelagert ist,
**dadurch gekennzeichnet, dass** wenigstens eine elastische Lagerungseinrichtung (6.1-6.7) aus mehreren zueinander beabstandet angeordneten Ringsegmenten (6.10-6.70) gebildet ist.

2. Kamerasystem (1,1') nach Anspruch 1, wobei die optoelektronische Sensoreinheit (3) über wenigstens zwei elastische Lagerungseinrichtungen (6,7) mit dem Gehäuse (2) verbunden ist.

3. Kamerasystem (1,1') nach Anspruch 1 oder 2, wobei wenigstens eine erste elastische Lagerungseinrichtung (6) die optoelektronische Sensoreinheit (3) im Bereich der wenigstens einen Optik (5) mit dem Gehäuse (2) verbindet und/oder wobei wenigstens eine zweite elastische Lagerungseinrichtung (7) die optoelektronische Sensoreinheit (3) im Bereich der wenigstens einen Detektoreinrichtung (4) mit dem Gehäuse (2) verbindet.

4. Kamerasystem (1,1') nach Anspruch 2 oder 3, wobei die elastischen Lagerungseinrichtungen (6,7) derart ausgelegt sind, insbesondere eine derartige Innengeometrie aufweisen, dass sie eine im Wesentlichen gleiche Steifigkeit und/oder Dämpfung in allen drei Raumrichtungen aufweisen.

5. Kamerasystem (1) nach Anspruch 2, 3 oder 4, wobei die elastischen Lagerungseinrichtungen (6,7) ringförmig ausgeführt sind.

6. Kamerasystem (1) nach Anspruch 5, wobei die ringförmigen elastischen Lagerungseinrichtungen (6,7) jeweils wenigstens folgendes umfassen:
- einen metallischen Innenring (6a,7a), welcher an der optoelektronischen Sensoreinheit (3) angeordnet ist;
- einen metallischen Außenring (6b,7b), welcher an dem Gehäuse (2) angeordnet ist; und
- ein, insbesondere aus Gummi gebildetes, ringförmiges Elastomerelement (6c,7c), über welches der metallische Innenring (6a,7a) mit dem metallischen Außenring (6b,7b) verbunden ist.

7. Kamerasystem (1) nach Anspruch 6, wobei das ringförmige Elastomerelement (6c,7c) an dem metallischen Innenring (6a,7a) und/oder an dem metallischen Außenring (6b,7b) mittels Vulkanisation befestigt ist.

8. Kamerasystem (1,1') nach einem der Ansprüche 3 bis 7, wobei der Schwerpunkt (9) der optoelektronischen Sensoreinheit (3) auf der optischen Achse (10) der Optik (5) wenigstens annähernd in der Mitte zwischen der wenigstens einen ersten elastischen Lagerungseinrichtung (6) und der wenigstens einen zweiten elastischen Lagerungseinrichtung (7) liegt.

9. Kamerasystem (1,1') nach einem der Ansprüche 1 bis 8, wobei wenigstens eine elastische Lagerungseinrichtung (6,6.1,7) vorhanden ist, über welche die optoelektronische Sensoreinheit (3) mit dem Gehäuse (2) oder mit einer vorzugsweise ringförmigen Halteeinrichtung (11) verbunden ist, welche ihrerseits mit dem Gehäuse (2) verbunden ist.

10. Kamerasystem (1') nach einem der vorhergehenden Ansprüche, wobei die Ringsegmente (6.30,6.50) der wenigstens einen elastischen Lagerungseinrichtung (6.3,6.5) in mehreren Gruppen, vorzugsweise von zwei oder drei Ringsegmenten (6.30,6.50) angeordnet sind.

11. Kamerasystem (1') nach einem der vorhergehenden Ansprüche, wobei die Ringsegmente (6.10-6.70) jeweils wenigstens folgendes umfassen:
- ein metallisches Innenringsegment (6.10a), welches an der optoelektronischen Sensoreinheit (3) angeordnet ist;
- ein metallisches Außenringsegment (6.10b), welches an dem Gehäuse (2) oder an der mit dem Gehäuse (2) verbundenen ringförmigen Halteeinrichtung (11) angeordnet ist; und
- ein, insbesondere aus Gummi gebildetes, Elastomerringsegment (6.10c), über welches das metallische Innenringsegment (6.10a) mit dem metallischen Außenringsegment (6.10b) verbunden ist.

12. Kamerasystem (1') nach einem der Ansprüche 6 bis 11, wobei eine Vorspannung des ringförmigen Elastomerelements oder des Elastomerringsegments (6.10c), insbesondere mittels einer veränderbaren Kompression des ringförmigen Elastomerelements oder des Elastomerringsegments (6.10c) in Längsrichtung (L) bezogen auf seinen Querschnitt, variabel einstellbar ist.

13. Kamerasystem (1') nach einem der Ansprüche 9 bis 12, wobei die wenigstens eine elastische Lagerungseinrichtung (6.1) zwischen der ringförmigen Halteeinrichtung (11) und einem ersten Gewindering (13) zur Fixierung angeordnet ist.

14. Kamerasystem (1') nach Anspruch 13, wobei ein zweiter Gewindering (14) zwischen der ringförmigen Halteeinrichtung (11) und dem ersten Gewindering (13) verschiebbar angeordnet ist, mittels welchem der metallische Außenring oder das metallische Außenringsegment (6.10b) derart entlang einer Innenkontur (11a) der ringförmigen Halteeinrichtung (11) verschiebbar ist, dass der auf das ringförmige Elastomerelement oder das Elastomerringsegment (6.10c) ausgeübte Druck in Längsrichtung (L) bezogen auf seinen Querschnitt veränderbar ist.

15. Kamerasystem (1') nach Anspruch 14, wobei der zweite Gewindering (14) ein Außengewinde und ein Innengewinde umfasst, welche unterschiedliche Drehrichtungen aufweisen.

16. Kamerasystem (1') nach einem der vorhergehenden Ansprüche, wobei die Ringsegmente (6.10-6.70) oder die Gruppen von Ringsegmenten (6.30,6.50) in gleichmäßigen Abständen entlang eines Innendurchmessers der ringförmigen Halteeinrichtung (11) angeordnet sind.

## Claims

1. Camera system (1, 1') comprising:
- a housing (2); and
- an optoelectronic sensor unit (3), arranged in the housing (2), having at least one detector device (4) and at least one optical unit (5) connected upstream of the at least one detector device (4), wherein the optoelectronic sensor unit (3) is elastically mounted in relation to the housing (2),
**characterised in that** at least one elastic mounting device (6.1-6.7) is formed from multiple ring segments (6.10-6.70) arranged spaced apart from one another.

2. Camera system (1, 1') as claimed in claim 1, wherein the optoelectronic sensor unit (3) is connected via at least two elastic mounting devices (6, 7) to the housing (2).

3. Camera system (1, 1') as claimed in claim 1 or 2, wherein at least one first elastic mounting device (6) connects the optoelectronic sensor unit (3) to the housing (2) in the region of the at least one optical unit (5) and/or wherein at least one second elastic mounting device (7) connects the optoelectronic sensor unit (3) to the housing (2) in the region of the at least one detector device (4).

4. Camera system (1, 1') as claimed in claim 2 or 3, wherein the elastic mounting devices (6, 7) are designed, in particular have an internal geometry, such that they have an essentially equal rigidity and/or damping in all three spatial directions.

5. Camera system (1) as claimed in claim 2, 3, or 4, wherein the elastic mounting devices (6, 7) are embodied as ring-shaped.

6. Camera system (1) as claimed in claim 5, wherein the ring-shaped elastic mounting devices (6, 7) each comprise at least the following:
- a metallic inner ring (6a, 7a), which is arranged on the optoelectronic sensor unit (3);
- a metallic outer ring (6b, 7b), which is arranged on the housing (2); and
- a ring-shaped elastomer element (6c, 7c), in particular formed from rubber, via which the metallic inner ring (6a, 7a) is connected to the metallic outer ring (6b, 7b).

7. Camera system (1) as claimed in claim 6, wherein the ring-shaped elastomer element (6c, 7c) is fastened by means of vulcanization on the metallic inner ring (6a, 7a) and/or on the metallic outer ring (6b, 7b).

8. Camera system (1, 1') as claimed in any one of claims 3 to 7, wherein the centre of gravity (9) of the optoelectronic sensor unit (3) lies on the optical axis (10) of the optical unit (5) at least approximately in the centre between the at least one first elastic mounting device (6) and the at least one second elastic mounting device (7).

9. Camera system (1, 1') as claimed in any one of claims 1 to 8, wherein at least one elastic mounting device (6, 6.1, 7) is provided, via which the optoelectronic sensor unit (3) is connected to the housing (2) or to a preferably ring-shaped holding device (11), which is in turn connected to the housing (2).

10. Camera system (1') as claimed in any one of the preceding claims, wherein the ring segments (6.30, 6.50) of the at least one elastic mounting device (6.3, 6.5) are arranged in multiple groups, preferably of two or three ring segments (6.30, 6.50).

11. Camera system (1') as claimed in any one of the preceding claims, wherein the ring segments (6.10-6.70) each comprise at least the following:
- a metallic inner ring segment (6.10a), which is arranged on the optoelectronic sensor unit (3);
- a metallic outer ring segment (6.10b), which is arranged on the housing (2) or on the ring-shaped holding device (11) connected to the housing (2); and
- an elastomer ring segment (6.10c), in particular formed from rubber, via which the metallic inner ring segment (6.10a) is connected to the metallic outer ring segment (6.10b).

12. Camera system (1') as claimed in any one of claims 6 to 11, wherein a pretension of the ring-shaped elastomer element or the elastomer ring segment (6.10c) is variably settable, in particular by means of a changeable compression of the ring-shaped elastomer element or the elastomer ring segment (6.10c) in the longitudinal direction (L) with respect to its cross section.

13. Camera system (1') as claimed in any one of claims 9 to 12, wherein the at least one elastic mounting device (6.1) is arranged between the ring-shaped holding device (11) and a first threaded ring (13) for fixation.

14. Camera system (1') as claimed in claim 13, wherein a second threaded ring (14) is arranged displaceably between the ring-shaped holding device (11) and the first threaded ring (13), by means of which the metallic outer ring or the metallic outer ring segment (6.10b) is displaceable along an inner contour (11a) of the ring-shaped holding device (11) such that the pressure exerted on the ring-shaped elastomer element or the elastomer ring segment (6.10c) is changeable in the longitudinal direction (L) with respect to its cross section.

15. Camera system (1') as claimed in claim 14, wherein the second threaded ring (14) comprises an external thread and an internal thread, which have different rotational directions.

16. Camera system (1') as claimed in any one of the preceding claims, wherein the ring segments (6.10-6.70) or the groups of ring segments (6.30, 6.50) are arranged at uniform intervals along an internal diameter of the ring-shaped holding device (11).

## Revendications

1. Système de caméra (1, 1') comprenant
- un boîtier (2) et
- une unité de capteur optoélectronique (3) agencée dans le boîtier (2) avec au moins un dispositif de détection (4) et au moins une optique (5) disposée en amont de l'au moins un dispositif de détection (4), l'unité de capteur électronique (3) étant montée de façon élastique par rapport au boîtier (2),
**caractérisé en ce qu'**au moins un dispositif de montage élastique (6.1 - 6.7) est formé de plusieurs segments de bague (6.10 - 6.70) espacés les uns des autres.

2. Système de caméra (1, 1') selon la revendication 1, dans lequel l'unité de capteur optoélectronique (3) est reliée par au moins deux dispositifs de montage élastiques (6, 7) au boîtier (2).

3. Système de caméra (1, 1') selon la revendication 1 ou 2, dans lequel au moins un premier dispositif de montage élastique (6) relie l'unité de capteur optoélectronique (3) au boîtier (2) dans la région de l'au moins une optique (5) et/ou dans lequel au moins un deuxième dispositif de montage élastique (7) relie l'unité de capteur optoélectronique (3) au boîtier (2) dans la région de l'au moins un dispositif de détection (4).

4. Système de caméra (1, 1') selon la revendication 2 ou 3, dans lequel les dispositifs de montage élastiques (6, 7) sont conçus de telle sorte, en particulier présentent une telle géométrie interne, qu'ils offrent une rigidité et/ou un amortissement sensiblement identiques dans les trois directions de l'espace.

5. Système de caméra (1) selon la revendication 2, 3 ou 4, dans lequel les dispositifs de montage élastiques (6, 7) sont annulaires.

6. Système de caméra (1) selon la revendication 5, dans lequel les dispositifs de montage élastiques annulaires (6, 7) comprennent chacun au moins
- une bague métallique intérieure (6a, 7a) qui est disposée sur l'unité de capteur électronique (3),
- une bague métallique extérieure (6b, 7b) qui est disposée sur le boîtier (2) et
- un élément annulaire en élastomère, en particulier constitué de caoutchouc, (6c, 7c) par lequel la bague métallique intérieure (6a, 7a) est reliée à la bague métallique extérieure (6b, 7b).

7. Système de caméra (1) selon la revendication 6, dans lequel l'un élément annulaire en élastomère (6c, 7c) est fixé à la bague métallique intérieure (6a, 7a) et/ou à la bague métallique extérieure (6b, 7b) par vulcanisation.

8. Système de caméra (1, 1') selon une des revendications 3 à 7, dans lequel le centre de gravité (9) de l'unité de capteur optoélectronique (3) sur l'axe optique (10) de l'optique (5) se trouve au moins approximativement à mi-chemin entre l'au moins un premier dispositif de montage élastique (6) et l'au moins un deuxième dispositif de montage élastique (7).

9. Système de caméra (1, 1') selon une des revendications 1 à 8, dans lequel est présent au moins un dispositif de montage élastique (6, 6.1, 7) par lequel l'unité de capteur optoélectronique (3) est reliée au boîtier (2) ou à un dispositif de retenue de préférence annulaire (11) qui est relié de son côté au boîtier (2).

10. Système de caméra (1') selon une des revendications précédentes, dans lequel les segments de bague (6.30, 6.50) de l'au moins un dispositif de montage élastique (6.3, 6.5) sont disposés en plusieurs groupes de préférence de deux ou trois segments de bague (6.30, 6.50).

11. Système de caméra (1') selon une des revendications précédentes, dans lequel les segments de bague (6.10 - 6.70) comprennent chacun au moins
- un segment de bague métallique intérieur (6.10a) qui est disposé sur l'unité de capteur électronique (3),
- un segment de bague métallique extérieur (6.10b) qui est disposé sur le boîtier (2) ou sur le dispositif de retenue annulaire (11) relié au boîtier (2) et
- un segment de bague en élastomère, en particulier constitué de caoutchouc, (6.10c) par lequel le segment de bague métallique intérieur (6.10a) est relié au segment de bague métallique extérieur (6.10b).

12. Système de caméra (1') selon une des revendications 6 à 11, dans lequel une tension initiale de l'élément annulaire en élastomère ou du segment de bague en élastomère (6.10c) est réglable de façon variable en particulier au moyen d'une compression variable de l'élément annulaire en élastomère ou du segment de bague en élastomère (6.10c) dans la direction longitudinale (L) par rapport à sa section transversale.

13. Système de caméra (1') selon une des revendications 9 à 12, dans lequel l'au moins un dispositif de montage élastique (6.1) est agencé entre le dispositif de retenue annulaire (11) et une première bague filetée (13) pour le fixer.

14. Système de caméra (1') selon la revendication 13, dans lequel entre le dispositif de retenue annulaire (11) et la première bague filetée (13) est agencée de façon coulissante une deuxième bague filetée (14) au moyen de laquelle la bague métallique extérieure ou le segment de bague métallique extérieur (6.10b) peut coulisser le long du contour intérieur (11a) du dispositif de retenue annulaire (11) de sorte à faire varier la pression exercée sur l'élément annulaire en élastomère ou le segment de bague en élastomère (6.10c) dans la direction longitudinale (L) par rapport à sa section transversale.

15. Système de caméra (1') selon la revendication 14, dans lequel la deuxième bague filetée (14) comprend un filetage extérieur et un filetage intérieur qui présentent des sens de rotation différents.

16. Système de caméra (1') selon une des revendications précédentes, dans lequel les segments de bague (6.10 - 6.70) ou les groupes de segments de bague (6.30, 6.50) sont disposés à intervalles réguliers le long d'un diamètre intérieur du dispositif de retenue annulaire (11).
